# FASCICULE DE BREVET EUROPEEN

(11) **EP 0 779 505 B1**
(45) Date de publication et mention de la délivrance du brevet: **02.07.2003**
(21) Numéro de dépôt: 96402634.8
(22) Date de dépôt: 05.12.1996
(51) Int. Cl.: G01N 3/04

(54) **Dispositif pour l'essai hors axes de matériaux anisotropes**
Vorrichtung zur ausseraxialen Prüfung von anisotropen Materialien
Device for off-axis tests of anisotropic materials

(30) Priorité: 12.12.1995 FR 9514698
(43) Date de publication de la demande: 18.06.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Abbe, François, 33127 Martignas (FR); Jabet, Christian, 90310 Yzeux (FR); Laroche, Emmanuel, 33000 Bordeaux (FR)
(74) Mandataire: Joly, Jean-Jacques

(56) Documents cités:
- DE-C- 671 954
- US-A- 5 138 887
- REVIEW OF SCIENTIFIC INSTRUMENTS, vol. 54, no. 8, Août 1983, USA, pages 1026-1030, XP002010479 GEORGESON: "load fixture for uniform platic deformation of single crystals"
- RHEOLOGIE DES MATERIAUX ANISOTROPES, 1984, PARIS, pages 131-150, XP000573771 BOEHLER ET AL.: "HETEROGENEITE DES CHAMPS DE CONTRAINTES ET DE DEFORMATION DANS LES MATERIAUX ANISOTROPESP"

## Description

La présente invention concerne un dispositif pour l'essai de matériaux, en particulier pour l'essai hors axes de matériaux anisotropes. Par essais hors axes, on entend ici des essais au cours desquels une sollicitation, telle qu'une traction ou une compression, est exercée sur des matériaux anisotropes dans des directions autres que des axes de symétrie éventuels des matériaux.

L'invention peut être utilisée pour différents types de matériaux anisotropes en particulier les matériaux composites à renfort fibreux et matrice et les matériaux composites de types lamifiés ou stratifiés.

Parmi les matériaux composites constitués d'un renfort fibreux densifié par une matrice, ceux visés sont plus particulièrement les matériaux dans lesquels le renfort est formé de fibres orientées dans une ou plusieurs directions définissant des axes de symétrie du matériau. Il en est ainsi dans le cas de renforts formés par des couches de tissu ou des nappes de fils ou câbles unidirectionnelles. Des exemples de tels matériaux composites utilisés pour la réalisation de pièces structurales destinées à subir des contraintes mécaniques ou thermomécaniques élevées sont les matériaux de type C-phénolique (renfort en fibres de carbone densifié avec une matrice phénolique), les matériaux de type C-C (renfort en fibres de carbone densifié avec une matrice carbone) et les matériaux composites à matrice céramique ou CMC (renfort en fibres réfractaires densifié avec une matrice céramique).

Parmi les matériaux lamifiés ou stratifiés, ceux visés sont plus particulièrement ceux formés par une superposition de couches de matières isotropes différentes liées entre elles, par exemple les lamifiés métal-caoutchouc, dans lesquels des axes de symétrie peuvent être trouvés dans les plans des couches ou perpendiculairement à celles-ci.

Les matériaux composites évoqués ci-avant, de même que certains matériaux lamifiés, trouvent des applications dans différents domaines, en particulier le domaine aérospatial, dans lesquels ils sont exposés à des sollicitations mécaniques ou thermomécaniques intenses. Il en est ainsi par exemple pour les matériaux composites destinés à constituer des éléments de propulseurs (corps de propulseurs, tuyères, ...) ou des matériaux lamifiés destinés à constituer des butées d'articulation de tuyère.

Dans une telle application, de même que dans d'autres applications où des impératifs similaires peuvent être rencontrés, il est nécessaire de caractériser aussi précisément que possible le comportement des matériaux sous sollicitations, en particulier afin de concevoir et dimensionner au mieux les pièces à réaliser pour limiter le plus possible leur masse au regard de contraintes de poids, d'encombrement et de coût.

Un procédé classique de caractérisation d'un matériau consiste à réaliser une éprouvette ayant un corps longitudinal muni d'une tête à chaque extrémité et à monter l'éprouvette dans une machine d'essai au moyen de mors reliés chacun à une tête d'éprouvette et à la machine pour transmettre à l'éprouvette une sollicitation en direction longitudinale, telle qu'une sollicitation en traction ou en compression.

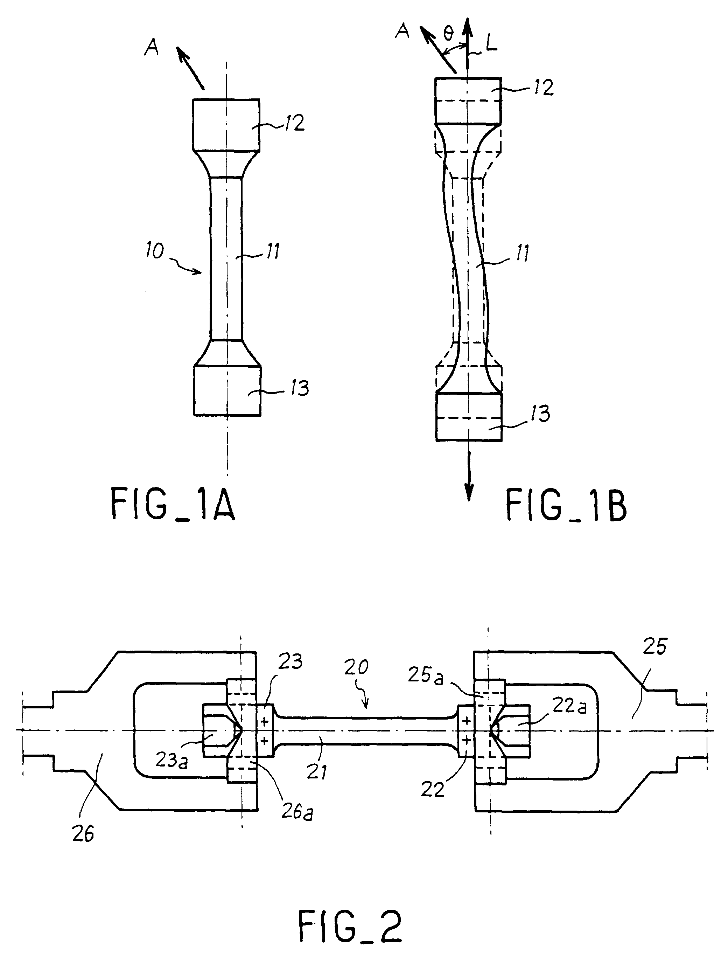

Avec des matériaux anisotropes, une difficulté surgit lorsque la direction de sollicitation ne coïncide pas avec un axe de symétrie du matériau (essai hors axes), car les directions principales de contraintes et de déformations ne sont pas confondues. Les figures 1A et 1B illustrent cette difficulté. La figure 1A montre une éprouvette 10 en matériau composite à renfort fibreux sous forme d'un barreau ayant un corps longitudinal 11 muni de têtes 12, 13 à ses extrémités. L'éprouvette 10 comporte un renfort fibreux constitué de strates planes superposées parallèles aux faces de l'éprouvette. Les strates sont constituées de nappes de fibres unidirectionnelles orientées suivant un axe A faisant un angle θ avec la direction longitudinale L de l'éprouvette. Une sollicitation en traction dans la direction L est exercée sur l'éprouvette 10 au moyen de mors fixes enserrant les têtes 12, 13 et reliés à une machine d'essai. La non-coïncidence entre les directions principales A et L de contraintes et de déformations a pour effets une hétérogénéité du champ de contrainte ainsi qu'une déformation en torsion en "S" de l'éprouvette en mors fixes, comme le montre la figure 1B. Sur cette figure, la forme initiale de l'éprouvette est montrée en traits interrompus. Les fortes hétérogénéités qui se développent lors d'essais hors axes conduisent à des interprétations erronées des données expérimentales et à des spécifications non réalistes des lois de comportement des matériaux anisotropes.

Pour remédier à ce problème, un montage tel qu'illustré par la figure 2 a été proposé par J. P. Boehler et al. dans un article intitulé "Hétérogénéité des champs de contraintes et de déformations dans les matériaux anisotropes", Rhéologie des matériaux anisotropes, Compte Rendu 19^{e} Colloque GFR, Paris, nov. 1984, Editions CEPADUES, Toulouse, 1986, p. 131-150. Dans ce montage, les têtes 22, 23 de l'éprouvette 20 sont équipées de couteaux 22a, 23a, tandis que les mors 25, 26 ont la forme d'étriers munis de porte-couteaux 25a, 26a ayant chacun une encoche sur le fond de laquelle s'appuie un couteau 22a, 23a.

Lors de l'essai, le montage autorise une déformation des têtes d'éprouvette en rotation autour des axes matérialisés par les fils des couteaux et la liberté donnée ainsi aux têtes d'éprouvette permet de conserver des champs de contraintes et de déformations homogènes sur la longueur du corps 21 de l'éprouvette.

Cette solution présente toutefois un certain nombre d'inconvénients.

En premier, il est nécessaire de former des couteaux sur chaque éprouvette, ce qui allonge notablement la durée de préparation des essais.

De plus, la position de l'axe de rotation des têtes est fixée par la position des couteaux sur l'éprouvette. Pour chaque configuration d'essai souhaitée, il est donc nécessaire de prévoir une géométrie particulière d'éprouvette.

De plus encore, l'inévitable écrouissage des couteaux lors de l'essai fait qu'il n'est pas possible de conserver un appui linéaire et engendre des frottements de plus en plus importants. Tant l'usinage des couteaux que le niveau des frottements sont impossibles à maîtriser, de sorte que la répétabilité des essais ne peut être garantie.

Enfin, le montage présente un risque d'instabilité angulaire ce qui, avec les autres inconvénients ci-dessus, rend le montage inutilisable pour des caractérisations de matériaux à l'échelle industrielle.

Il est également connu du document DE-C-671954 un dispositif d'essai en traction dans lequel les mors sont réalisés de manière à permettre une déformation des éprouvettes par rotation des têtes autour de centres situés dans le corps de l'éprouvette, afin d'éviter des sollicitations en flexion sur l'éprouvette. Chaque tête d'éprouvette est filetée et vissée sur une première pièce qui présente une surface courbe cylindrique ou sphérique prenant appui sur une surface de même forme formée sur une deuxième pièce reliée à la machine d'essai.

Avec ce dispositif, la faculté de déformation par rotation des têtes d'éprouvette est offerte par frottement entre les surfaces de guidage courbes en contact des mors. Un tel frottement est source importante d'usure qui, là aussi, ne permet pas de garantir la répétabilité des essais.

La présente invention a pour but de remédier à ces inconvénients en proposant un dispositif d'essai plus fiable, simple à mettre en oeuvre et apte à une utilisation industrielle, pour l'essai de matériaux anisotropes, en particulier de matériaux composites.

Ce but est atteint au moyen d'un dispositif comprenant deux mors ayant chacun une première partie destinée à être reliée à une tête d'éprouvette et une deuxième partie destinée à être reliée à une machine d'essai, dispositif dans lequel, dans chaque mors, la première partie et la deuxième partie sont reliées l'une à l'autre par une liaison autorisant au moins un degré de liberté en rotation autour d'un axe de rotation ayant une direction transversale par rapport à la direction longitudinale de sollicitation et situé à l'extérieur de la deuxième partie, du côté opposé à la première partie, de manière à permettre, au cours d'un essai, une déformation d'une éprouvette par inclinaison de chaque tête par rapport au corps de l'éprouvette, autour de l'axe de rotation correspondant, de sorte que peuvent être libérées des contraintes parasites de l'éprouvette dues à la non-coïncidence entre la direction de sollicitation et un axe de symétrie du matériau, la liaison entre la première partie et la deuxième partie de chaque mors comprenant un rouleau monté libre en rotation sur la deuxième partie et guidé entre des surfaces cylindriques de la première partie.

Ainsi, avec un tel dispositif, les éprouvettes peuvent être réalisées avec des formes standards, divers emplacements des axes de rotation étant offerts soit en disposant de jeux de mors différents, soit en positionnant l'éprouvette plus ou moins profondément dans les mors. De plus, la liaison entre une éprouvette et un mors peut être réalisée de façon classique et ne présente pas de risque d'instabilité ou d'usure par frottement pouvant nuire à la répétabilité des essais.

On peut aussi réaliser des surfaces de guidage courbes ayant une courbure variable , de sorte que la position de l'axe ou centre de rotation d'une tête d'éprouvette varie au cours de la rotation de celle-ci. Cette disposition permet d'optimiser l'élimination de contraintes parasites.

L'invention sera mieux comprise à la lecture de la description faite ci-après, à titre indicatif mais non limitatif.

Sur les dessins annexés :
- les figures 1A et 1B, déjà décrites, montrent une éprouvette de matériau anisotrope respectivement hors sollicitation et sous sollicitations hors axes au moyen de mors fixes ;
- la figure 2, déjà décrite, montre un montage d'essai hors axes de matériaux anisotropes selon l'art antérieur ;
- la figure 3 est une vue schématique en perspective d'un premier mode de réalisation d'un dispositif d'essai conforme à l'invention ;
- la figure 4 est une vue éclatée en perspective montrant les différents constituant d'un mors du dispositif de la figure 3 ;
- les figures 5A et 5B montrent une éprouvettes de matériau anisotrope respectivement hors sollicitation et sous sollicitation hors axes au moyen du dispositif de la figure 3.

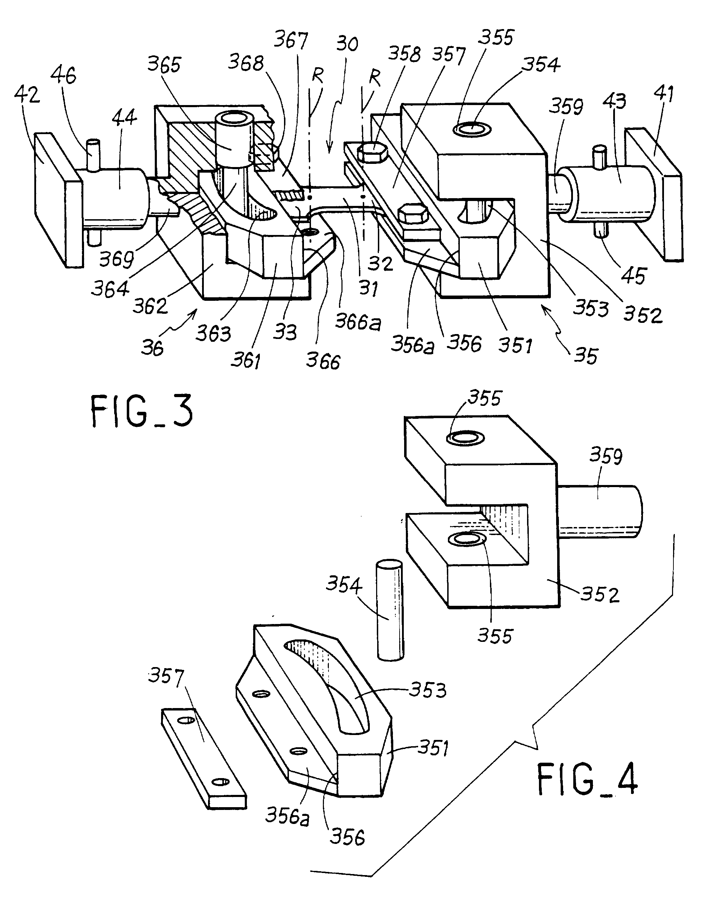

La figure 3 montre un dispositif d'essai comprenant deux mors 35, 36 enserrant les têtes 32, 33 d'une éprouvette 30 en matériau anisotrope en forme de barreau plan, tandis que la figure 4 montre de façon éclatée les pièces constitutives du mors 35, le mors 36 ayant une configuration semblable.

Chaque mors 35, 36 comprend une première partie 351, 361 reliée rigidement à une tête de l'éprouvette et une deuxième partie 352, 362 reliée rigidement à un plateau respectif 41, 42 d'une machine d'essai, en l'espèce une machine d'essai en traction (non complètement représentée).

Chacune des premières parties 351, 361 comporte un chemin de came 353, 363 formé par une lumière en arc délimitée par deux surfaces en forme de secteurs cylindriques concentriques à section circulaire. Les deuxièmes parties 352, 362 ont la forme de chapes dans lesquelles des rouleaux respectifs 354, 364 sont montés libres en rotation. Chaque rouleau 354, 364 est supporté par des roulements à aiguilles 355, 365 logés dans des perçages coaxiaux formés dans les ailes de la chape respective 352, 362. Le diamètre des rouleaux 354, 364 correspond sensiblement à la largeur des chemins de came 353, 363 de sorte que les rouleaux peuvent y rouler, sans glissement.

Chaque première partie de mors 351, 361 présente un décrochement 356, 366 dans lequel une tête d'éprouvette vient se loger et est maintenue en étant enserrée entre une face 356a, 366a du décrochement et un segment d'arrêt, ou contre-plaque, 357, 367 au moyen de boulons 358, 368.

Chaque deuxième partie 352, 362 comprend une tête cylindrique 359, 369 qui fait saillie au centre du côté de la chape opposé aux ailes de celle-ci. Un tube 43, 44 solidaire d'un plateau respectif 41, 42 de la machine d'essai est engagé sur la tête cylindrique et y est verrouillé par une goupille 45, 46.

L'éprouvette 30 est montée sur la machine d'essai en enserrant ses têtes 32, 33 entre les premières parties 351, 361 et les segments d'arrêt 357, 367 des mors 35, 36. La figure 5A montre une éprouvette 30 en matériau anisotrope semblable à celle de la figure 1A ainsi que, schématiquement, les positions relatives des chemins de came 353, 363 et des rouleaux 354, 364. Le matériau de l'éprouvette 30 est par exemple un matériau composite ayant un renfort fibreux avec des fibres orientées suivant un axe de symétrie faisant un angle θ avec la direction longitudinale du corps 31 de l'éprouvette, lesquelles fibres étant parallèles aux faces de l'éprouvette.

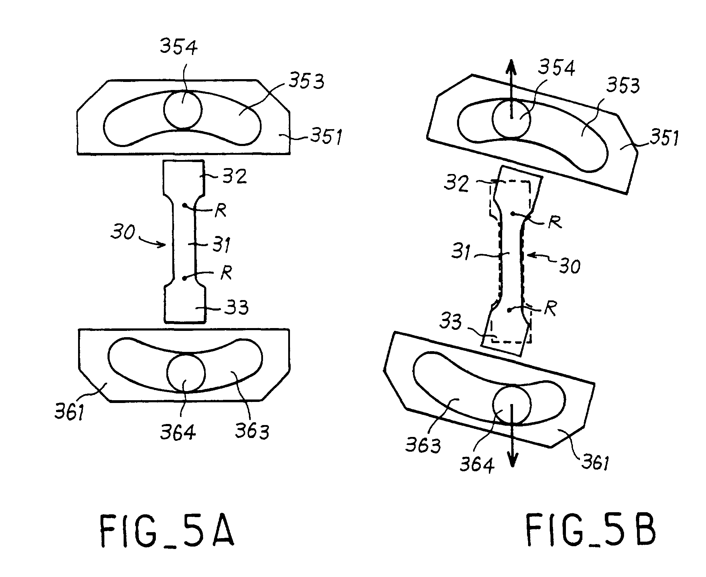

Lors de la sollicitation en traction, la faculté du rouleau 354, 364 de rouler dans le chemin de came 353, 363 fait que les têtes 32, 33 peuvent se déformer librement par rapport au corps 31 de l'éprouvette en pivotant autour d'un axe de rotation R qui est perpendiculaire aux faces de l'éprouvette (figure 5B). Il en résulte un champ de contraintes homogène dans le corps de l'éprouvette et l'absence de déformation en torsion de celui-ci. L'axe de rotation R est défini ici comme étant l'axe des surfaces cylindriques définissant un chemin de came. La figure 5B montre que, par roulement des rouleaux 354, 364, les parties 351, 361 des mors suivent les déformations des têtes de l'éprouvette, libérant les contraintes parasites au niveau de ces têtes. Sur la figure 5B, la forme initiale de l'éprouvette est montrée en traits interrompus.

Dans l'exemple illustré par les figures SA et 5B, les axes de rotation R sont situés dans la partie utile de l'éprouvette, c'est-à-dire le corps 31, au voisinage des raccordements avec les têtes 32, 33. Il est nécessaire que ces axes de rotation se situent à l'extérieur des premières parties 351, 361 des mors 35, 36, du côté opposé aux deuxièmes parties, afin de se trouver dans des zones non contraintes par la fixation sur les mors. Selon la nature particulière de l'essai à réaliser, par exemple essai en traction élastique, essai en traction avec endommagement du matériau, les positions des axes de rotation peuvent être choisies plus ou moins profondément dans la partie utile de l'éprouvette. Il suffit à cet effet de disposer de mors adaptés, c'est-à-dire avec différents jeux de chemins de came ou bien de brider plus ou moins profondément l'éprouvette dans le mors, les éprouvettes pouvant toutes être réalisées de la même façon. On notera en outre que le montage de l'éprouvette dans les mors est simple et rapide, et ne présente aucune instabilité angulaire.

Dans l'exemple qui précède, le montage de l'éprouvette offre, à chaque extrémité, un seul degré de liberté en rotation autour d'un axe perpendiculaire aux faces de l'éprouvette. Ce montage convient lorsque le matériau présente, dans l'éprouvette, un axe de symétrie parallèle aux faces de celle-ci.

On notera enfin que les montages des figures 3, 4 conviennent pour réaliser non seulement des essais en traction, mais aussi des essais en compression.

Dans ce qui précède, les surfaces de guidage sur lesquelles roulent sans glisser les rouleaux 354, 364 sont cylindriques à section circulaire ou sphériques, donc définissent, pour chaque tête d'éprouvette, un axe ou centre de rotation fixe.

Afin de pouvoir libérer au mieux les contraintes parasites, il pourra être préféré de faire évoluer la position du centre ou de l'axe de rotation, par exemple en l'éloignant progressivement de l'extrémité correspondante de l'éprouvette au fur et à mesure de la déformation de la tête d'éprouvette située à cette extrémité.

A cet effet, on confère aux surfaces de guidage un rayon de courbure variable, par exemple croissant, de façon continue ou par paliers, à partir de leur centre et vers leurs bords latéraux.

Bien entendu, si nécessaire, l'emplacement du centre ou de l'axe de rotation pourra varier en direction opposée à celle envisagée ci-dessus.

## Revendications

1. Dispositif pour l'essai de matériau anisotrope, notamment de matériau composite, sous forme d'éprouvette (30) ayant un corps longitudinal (31) muni d'une tête (32, 33) à chaque extrémité, lequel dispositif comprend :
deux mors (35, 36) ayant chacun une première partie (351, 361) destinée à être reliée à une tête d'éprouvette et une deuxième partie (352, 362) destinée à être reliée à une machine d'essai afin de pouvoir transmettre à une éprouvette une sollicitation ayant une direction longitudinale non nécessairement confondue avec un axe de symétrie du matériau,
la première partie (351, 361) et la deuxième partie (352, 361) étant dans chaque mors reliées l'une l'autre par une liaison autorisant au moins un degré de liberté en rotation autour d'au moins un axe de rotation ayant une direction transversale par rapport à la direction longitudinale de sollicitation et situé à l'extérieur de la deuxième partie, du côté opposé à la première partie, de manière à permettre, au cours d'un essai, une déformation d'une éprouvette par rotation de chaque tête par rapport au corps de l'éprouvette, de sorte que peuvent être libérées des contraintes parasites de l'éprouvette dues à la non-coïncidence entre la direction de sollicitation et un axe de symétrie du matériau,
**caractérisé en ce que** la liaison entre la première partie (351, 361) et la deuxième partie (352, 362) de chaque mors comprend un rouleau (354, 364) monté libre en rotation sur la deuxième partie et guidé entre des surfaces cylindriques de la première partie.

2. Dispositif selon la revendication 1, **caractérisé en ce que** lesdites surfaces de guidage courbes ont une courbure variable, de sorte que la position de l'axe ou centre de rotation pour une tête d'éprouvette varie au cours de la rotation de celle-ci.

## Patentansprüche

1. Vorrichtung zur Prüfung von anisotropem Material, insbesondere Verbundmaterial, in Form eines Probestücks (30) mit einem länglichen Körper (31), welcher mit einem Kopfstück (32, 33) an jedem Ende ausgestattet ist, wobei die Vorrichtung aufweist:
zwei Anschlußstücke (35, 36) mit jeweils einem erstem Teil (351, 361), der dazu bestimmt ist, mit einem Kopfstück des Probestücks verbunden zu werden, und einem zweiten Teil (352, 362), das dazu bestimmt ist, mit einer Prüfungsmaschine verbunden zu werden, so dass eine Belastung auf das Probestück übertragen werden kann, die eine Längsrichtung hat, die nicht notwendigerweise mit einer Symmetrieachse des Materials übereinstimmt,
das erste Teil (351, 361) und das zweite Teil (352, 362) sind in jedem Anschlußstück mit einander verbunden über eine Verbindung, die mindestens einen Rotationsfreiheitsgrad um mindestens eine Rotationsachse quer zur Längsrichtung der Belastung erlaubt, die außerhalb des zweiten Teils, auf der dem ersten Teil zugewandten Seite, liegt, so dass im Verlauf einer Prüfung eine Verformung des Probestücks durch Rotation jedes Kopfstücks in Bezug auf den Körper des Probestücks ermöglicht wird, so dass parasitäre Zwänge freigegeben werden können, die durch die Nicht-Übereinstimmung zwischen der Belastungsrichtung und einer Symmetrieachse des Materials verursacht werden,
**dadurch gekennzeichnet, dass** das die Verbindung zwischen dem ersten Teil (351, 361) und dem zweiten Teil (352, 362) jedes Anschlußstücks eine Rolle (354, 364) aufweist, die drehbar am zweiten Teil angebracht ist und zwischen den zylindrischen Oberflächen des ersten Teils geführt ist.

2. Vorrichtung nach Anspruch 1, **dadurch gekennzeichnet, dass** die genannten, gekrümmten Oberflächen zur Führung eine sich ändernde Krümmung besitzen, so dass die Position der Achse oder des Rotationszentrums für ein Kopfstück des Probestücks während der Rotation desselben variiert.

## Claims

1. Device for testing an anisotropic material, especially a composite, in the form of a test piece (30) having a longitudinal body (31) provided with a head (32, 33) at each end, which device comprises:
- two jaws (35, 36) each having a first part (351, 361) intended to be connected to a test piece head and a second part (352, 362) intended to be connected to a testing machine so as to be able to transmit, to a test piece, a stress having a longitudinal direction not necessarily coincident with an axis of symmetry of the material;
- the first part (351, 361) and the second part (352, 362) being, in each jaw, connected to each other by a link allowing at least one degree of rotational freedom about at least one axis of rotation having a direction transverse to the longitudinal stressing direction and located to the outside of the second part, on the opposite side from the first part, so as to allow, during a test, a test piece to deform by rotation of each head relative to the body of the test piece, so that the said parts may be freed of the extraneous stresses on the test piece that are due to the stressing direction not being coincident with an axis of symmetry of the material;
**characterized in that** the link between the first part (351, 361) and the second part (352, 362) of each jaw comprises a roller (354, 364) mounted so as to rotate freely on the second part and guided between cylindrical surfaces of the first part.

2. Device according to Claim 1, **characterized in that** the said curved guiding surfaces have a variable curvature so that the position of the axis or centre of rotation for a test piece head varies during rotation of the latter.
